Europäisches Patentamt

**European Patent Office**

Office européen des brevets

(11) Numéro de publication: **0 144 024**
**B1**

(12) FASCICULE DE BREVET EUROPEEN

④⑤ · Date de publication du fascicule du brevet:
07.01.88

(21) Numéro de dépôt: 84113790.4

(22) Date de dépôt: 15.11.84

(51) Int. Cl.⁴: **B 65 G 47/64,** F 16 H 21/44

54 Dispositif d'entraînement en rotation d'une table tournante.

· (30) Priorité: **21.11.83 FR 8318485**

(43) Date de publication de la demande:
**12.06.85 Bulletin 85/24**

(45) Mention de la délivrance du brevet:
**07.01.88 Bulletin 88/1**

(84) Etats contractants désignés:
**AT BE CH DE FR GB IT LI LU NL SE**

(56) Documents cités:
**DE - A - 1 296 093**
**FR - A - 2 270 177**

(73) Titulaire: **Compagnie Générale de Productique, 98, rue d'Ambert, F-45000 Orléans (FR)**

(72) Inventeur: **Montigny, Bruno, 28, allée du Clos Fleuri, F-45000 Orleans (FR)**

(74) Mandataire: **Weinmiller, Jürgen et al, Lennéstrasse 9 Postfach 24, D-8133 Feldafing (DE)**

## Description

La présente invention concerne un dispositif d'entraînement en rotation d'une table tournante autour d'un axe fixe.

Dans une installation de manutention, on utilise par exemple une table tournante à un carrefour de voies d'un convoyeur pour faire passer une charge en provenance d'une allée vers une allée perpendiculaire.

La rotation de la table est produite par un groupe moto-réducteur à vitesse constante par l'intermédiaire d'une liaison à pignon et couronne ou pignons et chaînes. Le document de brevet DE-B-1 296 093 montre par exemple un tel état de la technique.

Cependant, avec un tel système, l'accélération, au début de la rotation et à la fin, est souvent trop importante pour les charges faibles et cela occasionne des ébranlements des charges et même parfois des chutes.

Le document de brevet FR-A-2 270 177 décrit une potence rotative destinée à prendre une charge sur un transporteur et à la déposer sur un autre transporteur disposé perpendiculairement ou réciproquement.

Ici, le déplacement en rotation du bras de la potence est progressif grâce à une bielle entraînée en rotation autour d'un axe fixe solidaire de la colonne de la potence, l'autre extrémité de la bielle étant assujettie à se déplacer dans une lumière rectiligne pratiquée dans le bras pivotant de la potence.

Cependant, l'application d'un tel système à une table tournante et non plus à une potence où l'on a une colonne fixe permettant de disposer de toute la place désirée pour le groupe moteur d'entraînement, pose le problème de l'encombrement du moteur d'entraînement qui doit être lié quelque part au bâti de la table, ce qui conduit à placer le moteur soit au-dessous de la couronne de rotation, imposant ainsi une hauteur minimale à la table, soit au-dessus de la couronne de rotation, nécessitant alors, pour la libre rotation du convoyeur au-dessus du groupe moteur, que les supports du convoyeur soient surélevés, augmentant ainsi l'encombrement vers le haut.

La présente invention a pour but de permettre un mouvement de rotation de la table tournante qui soit progressif, assurant ainsi une très bonne stabilité aux charges, même aux charges de faible poids, tout en utilisant un groupe moto réducteur simple à vitesse constante, solidaire de la partie mobile de la table.

L'invention a ainsi pour objet un dispositif d'entraînement en rotation d'une table tournante autour d'un premier axe fixe $\Delta$, comprenant la table, un bâti fixe et un groupe moto-réducteur d'entraînement fixé à ladite table connu de DE-B-1 296 093, caractérisé en ce qu'il comprend une bielle dont l'une des extrémités est mobile en rotation autour d'un second axe $\gamma$ fixe par rapport à la table, ledit second axe $\gamma$ étant distinct dudit premier axe $\Delta$ de rotation de la table, ledit groupe moto-réducteur entraînant en rotation ladite bielle autour dudit second axe $\gamma$, des moyens pour assujettir l'extrémité opposée de ladite bielle à suivre un chemin rectiligne fixe par rapport au bâti, la ligne médiane de ce chemin passant par ledit premier axe $\Delta$ de rotation de la table, la course de ladite bielle étant limitée entre deux positions extrêmes telles que dans chacune de ces deux positions, correspondant selon le sens de rotation de la table soit à un début de rotation, soit à une fin de rotation, ledit chemin rectiligne est perpendiculaire à ladite bielle.

Dans un mode de réalisation préféré lesdits moyens pour assujettir ladite extrémité opposée de la bielle à suivre un chemin rectiligne comprennent un maneton lié à la bielle et une lumière de guidage du maneton, pratiquée dans une règle fixe liée au bâti fixe.

Si le groupe moto-réducteur tourne à vitesse constante, la loi du mouvement en fonction du temps, de la rotation de la table est une loi trigonométrique du type suivant:

$$tg\ \beta = \frac{T\sin\omega t}{R - T\cos\omega t}$$

dans laquelle relation, $\gamma$ désigne l'angle de rotation de la table, $\omega$ la pulsation de la rotation de la bielle, $T$ la longueur de la bielle et $R$ la distance séparant l'axe de rotation de la table de l'axe de rotation de la bielle. Dans le cas fréquent, où la rotation est de 90°, la formule est simplifiée et devient:

$$tg\ \beta = \frac{\sin\omega t}{2 - \cos\omega t}$$

A l'approche des courses extrêmes, début et fin de mouvement, la vitesse est de faible valeur. Pour un angle important de la bielle ($\omega t$) la rotation de la table ($\beta$) est de faible valeur. Cette particularité de la loi trigonométrique confère au système une grande précision d'arrêt, utile à l'alignement des convoyeurs pour le transfert des charges.

L'invention sera mieux comprise à la lumière de la description d'un exemple de réalisation de l'invention, faite ci-après en référence au dessin annexé dans lequel:

la figure 1 montre schématiquement le dispositif d'entraînement en rotation de l'invention,

les figures 2, 3 et 4 montrent selon trois vues, une table tournante pour convoyeur à chaînes équipée d'un dispositif selon l'invention,

la figure 5 est la même que la figure 3, mais après une rotation de la table de 90° dans le sens des aiguilles d'une montre.

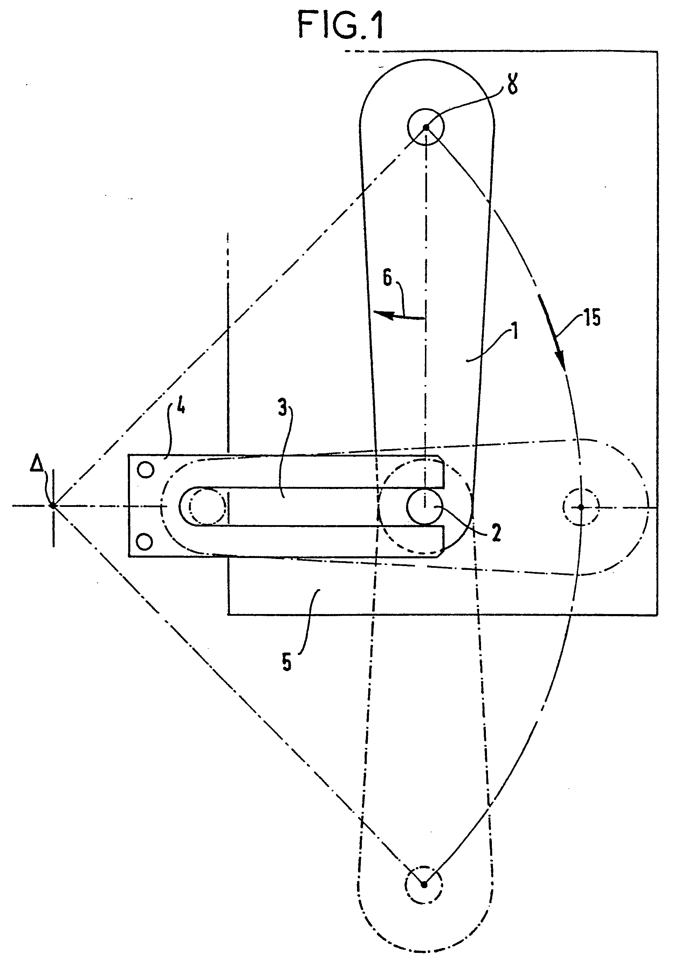

En se référant à la figure 1, on voit une bielle 1 mobile en rotation autour d'un axe $\gamma$. L'extrémité opposée de la bielle comporte un maneton 2 qui s'engage dans une lumière 3 réalisée dans une réglette fixe 4. L'axe $\gamma$ de rotation de la bielle 1 est liée à une table tournante 5 mobile en rotation autour d'un axe fixe $\Delta$. La ligne médiane de la lumière 3 passe par l'axe de rotation $\Delta$ de la table 5.

On voit qu'un entraînement en rotation de la biele 1, dans le sens de la flèche 6, entraîne une rotation de la table 5, autour de son axe de rotation Δ, dans le sens de la flèche 15. Pendant le même temps, le maneton 2 pénètre dans la lumière 3.

Ainsi, l'axe γ de la bielle 1 tourne avec la table 5 autour de l'axe Δ pendant que la bielle elle-même tourne par rapport à la table autour de son axe γ.

Des butées, adéquatement placées, limitent les positions extrêmes à celles représentées en traits forts et en traits fins sur la figure dans chacune desquelles, la bielle 1 est perpendiculaire à la lumière 3. Ces positions extrêmes constituent les positions de départ et de fin de rotation, ou vice-versa pour une rotation en sens inverse.

Dans la figure, la rotation de la table entre ces deux positions extrêmes est de 90°, ce qui est le cas le plus généralement souhaité mais bien entendu, pour augmenter ou diminuer cet angle de rotation de la table 5, en conservant la perpendicularité aux extrêes, il suffit d'allonger ou de diminuer, selon le cas, la longueur de la bielle 1.

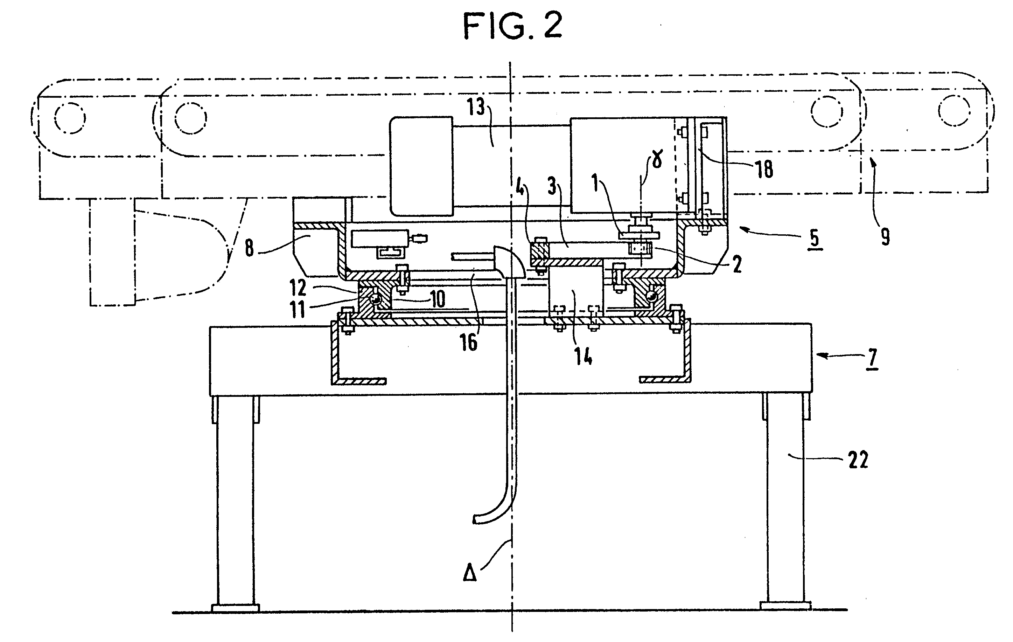

Les figures 2, 3 et 4 montrent, selon trois vues, une réalisation pratique d'une table tournante pour convoyeur à chaînes fonctionnant conformément au principe représenté figure 1.

L'ensemble comprend un châssis fixe 7 et un ensemble ou table tournante 5 libre en rotation autour d'un axe Δ.

La table tournante 5 comprend elle-même un châssis support 8 d'un convoyeur 9 à chaînes. Le châssis support 8 comprend à sa base une couronne intérieure 10 de roulement à billes 11 dont la couronne extérieure 12 est solidaire du châssis fixe 7. Ce mécanisme, 10, 11, 12, à roulement à billes sert de butée axiale et radiale à l'ensemble tournant ou table 5.

Un group moto-réducteur 13, dont l'arbre de sortie est lié à la bielle 1 de façon à ce que son axe de rotation soit confondu avec l'axe γ de rotation de la bielle, est fixé à la table tournante 5 sur le châssis support 8 du convoyeur 9, et la réglette 4, portant la lumière 3 dans laquelle s'engage le maneton 2, est fixée sur le châssis fixe 7 par l'intermédiaire d'une pièce support 14 passant par le trou central 16 de la couronne 10.

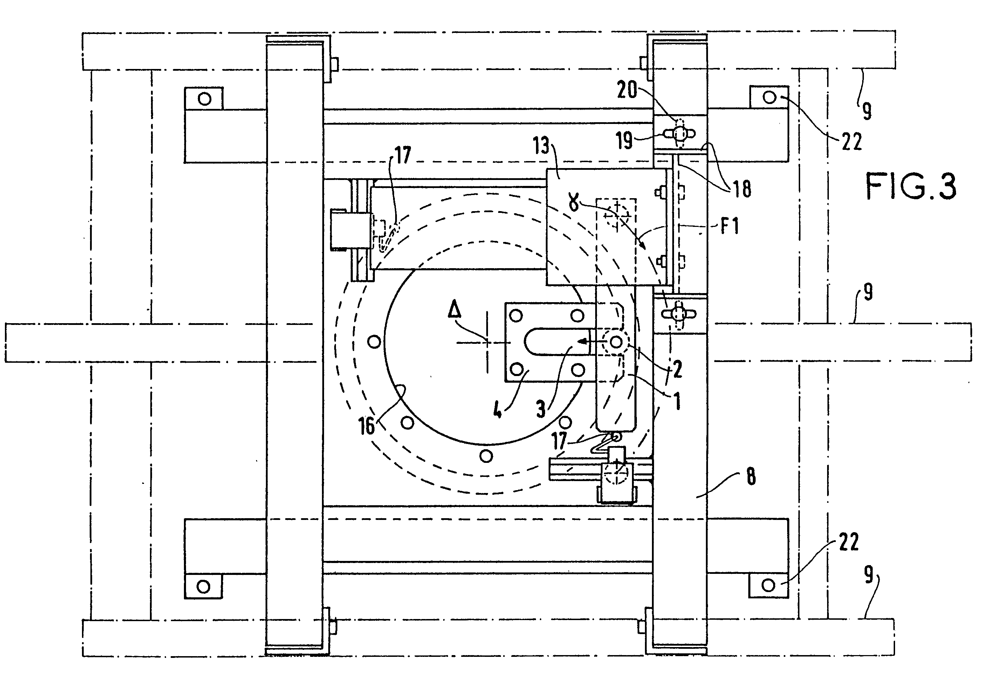

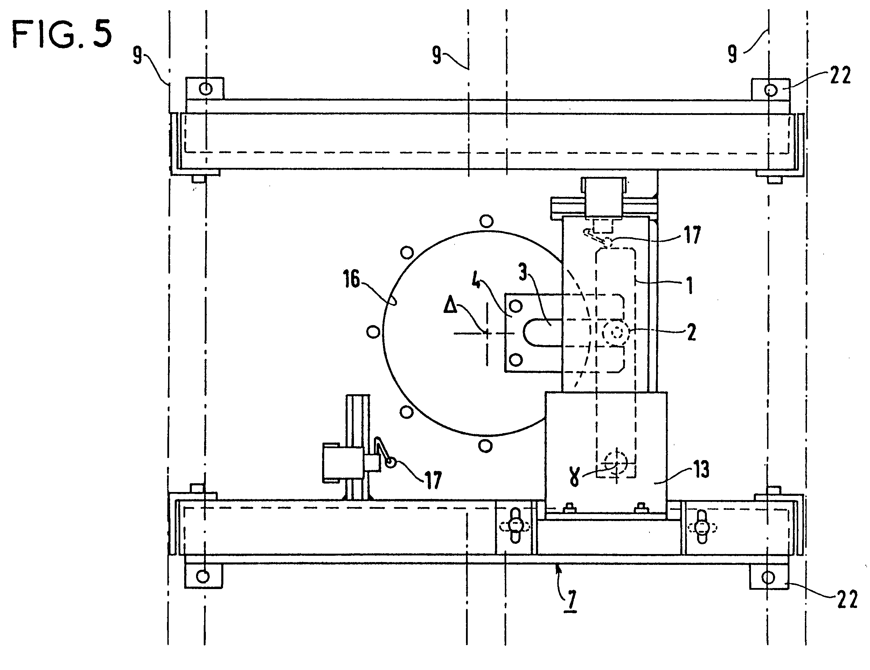

La figure 3 montre que la bielle 1 est prolongée au-delà du maneton 2 de manière à actionner, en début et en fin de rotation, un dispositif de fin de course 17 commandant l'arrêt du groupe moto-réducteur 13. Les deux dispositifs de fin de course 17 sont liés au châssis tournant 8. La figure 5 permet de voir la disposition des pièces de l'ensemble après une rotation de la table de 90° dans le sens de la flèche F1.

Le groupe moto-réducteur 13 est fixé sur un cadre 18, lui-même fixé sur une poutre du châssis tournant 8 au moyen de boulons passant par deux trous oblongs 19 et 20 permettant le réglage exact de la position du groupe moto-réducteur et donc de l'axe γ de la bielle 1 par rapport à l'axe Δ de rotation de la table.

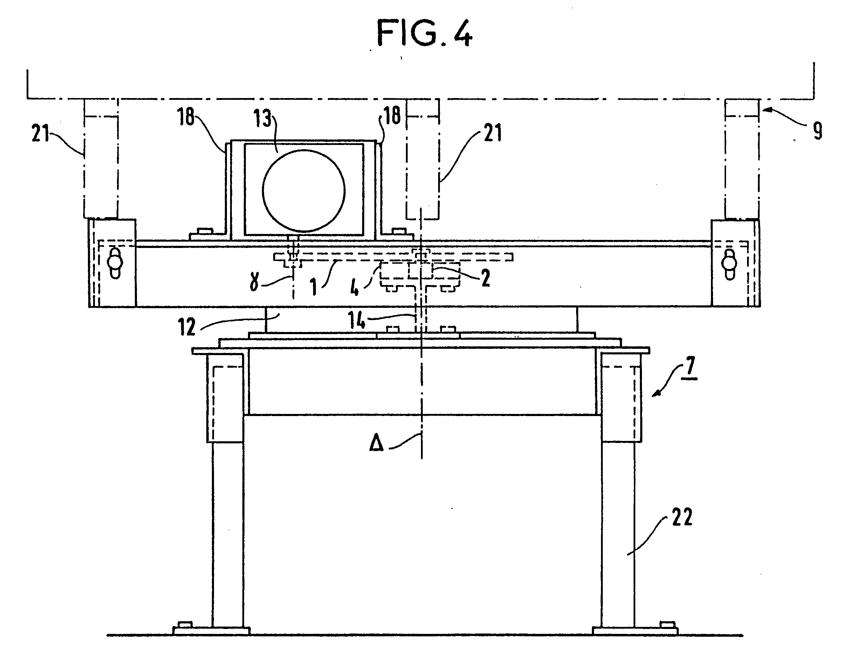

La figure 4 permet de voir la position du groupe moto-réducteur 13 sur le châssis 8 entre deux longerons 21 d'appui de chaîne. On voit donc que le moteur, solidaire de la partie tournante, peut être situé à un endroit tel qu'il·n'augmente en rien l'encombrement de l'ensemble, ce qui ne serait pas le cas s'il devait être lié au châssis fixe.

Le dispositif selon l'invention assure, avec un système mécanique simple, une excellente stabilité des charges grâce à la progressivité de la vitesse et de l'accélération. Le groupe moto-réducteur 13 est un groupe simple à vitesse constante. L'arrêt du mouvement se fait avec une grande précision.

## Revendications

1. Dispositif d'entraînement en rotation d'une table tournante (5) autour d'un premier axe fixe (Δ), comprenant la table, un bâti fixe (7) et un groupe moto-réducteur d'entraînement fixé à ladite table, caractérisé en ce qu'il comprend une bielle (1) dont l'une des extrémités est mobile en rotation autour d'un second axe (γ) fixe par rapport à la table, ledit axe étant distinct du premier axe (Δ) de rotation de la table, ledit groupe moto-réducteur (13) entraînant en rotation ladite bielle autour dudit second axe (γ), des moyens (2, 3) pour assujettir l'extrémité opposée de ladite bielle à suivre un chemin rectiligne fixe par rapport au bâti, la ligne médiane de ce chemin passant par ledit premier axe (Δ) de rotation de la table, la course de ladite bielle étant limitée entre deux positions extrêmes telles que dans chacune de ces deux positions, correspondant, selon le sens de rotation de la table, soit à un début, soit à une fin de rotation, ledit chemin rectiligne est perpendiculaire à ladite bielle.

2. Dispositif selon la revendication 1, caractérisé en ce que lesdits moyens pour assujettir ladite extrémité opposée de la bielle à suivre un chemin rectiligne comprennent un maneton (2) lié à la bielle et une lumière de guidage (3) du maneton, pratiquée dans une règle (4) fixe liée au bâti fixe (7).

## Patentansprüche

1. Antriebsvorrichtung zur Rotation eines Drehtisches (5) um eine erste feste Achse (Δ), mit dem Tisch, einem feststehenden Gerüst (7) und einem am Tisch befestigten Antriebsmotor, dadurch gekennzeichnet, dass sie eine Kurbelstange (1), deren eines Ende um eine in bezug auf den Tisch feste zweite Achse (γ) drehbeweglich ist, wobei diese zweite Achse (γ) sich von der ersten Drehachse (Δ) des Tisches unterscheidet und der Motor (13) die Kurbelstange um die zweite Achse (γ) in Drehung versetzt, und Mittel (2, 3) aufweist, um das entgegengesetzte Ende der Kurbelstange dazu zu zwingen, einem in bezug auf das Gerüst festgelegten geradlinigen Weg zu folgen, wobei die Mittellinie dieses Wegs durch die erste Drehachse (Δ) des Tisches führt, der Weg der Kurbelstange zwischen zwei solchen Endstellungen begrenzt ist, dass in jeder dieser beiden Stellungen, die je nach der Drehrichtung des Tisches entweder einem Drehbeginn oder einem Drehende entsprechen, der geradlinige Weg senkrecht zur Kurbelstange liegt.

2. Vorrichtung nach Anspruch 1, dadurch gekennzeichnet, dass die Mittel, um das entgegengesetzte Ende der Kurbelstange dazu zu zwingen, einen geradlinigen Weg zu verfolgen, einen mit der Kurbelstange verbundenen Kurbelzapfen (2) und eine Führungsöffnung (3) für den Kubelzapfen in einer mit dem feststehenden Gerüst (7) verbundenen feststehenden Latte (4) enthalten.

## Claims

1. A device for driving into rotation a turning table (5) around a first stationary axis (Δ), comprising the table, a stationary frame (7) and a drive motor fixed to said table, characterized in that it comprises a connecting rod (1), one of the ends of which is mobile in rotation around a second axis (γ) fixed with respect to the table, said axis being different from the first rotation axis (Δ) of the table, said motor (13) driving said connection rod into rotation around said second axis (γ), means (2, 3) for submitting the opposed end of said connecting rod to a rectilinear course passing through said first rotation axis (Δ) of the table, the course of said connecting rod being limited between two end positions such that in each of these positions, corresponding, according to the rotation direction of the table, either to a start or to an end of rotation, said rectilinear course is perpendicular to said connecting rod.

2. A device according to claim 1, characterized in that said means for submitting said opposed end of the connecting rod to a rectilinear course comprise a crank pin (2) connected to the connecting rod and a slot (3) for guiding the crank pin practiced into a fixed rod (4) connected to the stationary frame (7).

0 144 024

# FIG.1

# FIG. 2

FIG.3

# FIG.4

FIG. 5